(19) Europäisches Patentamt
European Patent Office
Office européen des brevets

(11) **EP 2 284 563 A1**

(12) **EUROPEAN PATENT APPLICATION**

(43) Date of publication:
16.02.2011 Bulletin 2011/07

(51) Int Cl.:
*G01S 5/00* (2006.01)  *H04W 48/04* (2009.01)

(21) Application number: 09167795.5

(22) Date of filing: 13.08.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(71) Applicants:
• Deutsche Telekom AG
53113 Bonn (DE)
• Technische Universität Berlin
10623 Berlin (DE)

(72) Inventors:
• Ketabdar, Hamed
10713 Berlin (DE)
• Peylo, Christoph
49401 Damme (DE)

(74) Representative: Heunemann, Dieter
Vossius & Partner
Siebertstrasse 4
81675 München (DE)

(54) **Method for detecting air plane flight events, mobile communication device, and computational unit therefor**

(57) The invention provides a method for detecting air plane flight events, preferably taking off and/or lauding, using at least one acceleration sensor associated with a mobile, GSM, communication device, the method comprising the steps of: obtaining at least one acceleration signal from said at least one acceleration sensor; pre-processing said obtained at least one acceleration signal to remove redundant information present in said signal(s); performing a feature extraction on said pre-processed at least one acceleration signal; and classifying air plane flight events based on the acceleration pattern represented by the extracted acceleration features.

Fig. 1

EP 2 284 563 A1

## Description

Field of the Invention

The invention relates to a system which is installed in airplane cargo, and detects taking off and landing using accelerometer sensors. This system then switches off the cargo GSM devices for taking off, and switches them on after the flight has landed.

Background of the invention

Using GSM communication devices during landing and take off of an airplane can potentially cause interference with flight navigation systems. Air cargo devices usually use GSM devices to communicate with cargo central management. When the cargo is loaded into the airplane, and the plane begins taking off, the GSM devices should be switched off to avoid interference with flight navigation systems. On the contrary, when the flight has landed completely, the GSM devices should be turned on again to allow communication with the central cargo system.

CN-A-1630232 describes a discrete tracking system and method, which installs RF card or barcode reader-writer in discrete distributed materials circulation place. RF card reader-writer reads out the information in RF card when materials circulation reaches or passes materials circulation place, resulting in obtaining the goods discrete tracking information. The tracking information is then transmitted to anyone who needs the information through GSM, GPRS, internet and intranet etc.

WO 01/33247 describes a system for determining the position of communication units for mounting on vehicles, containers or similar. Both the communication unit and the mobile unit may be provided with detectors, which may detect activity in the surroundings.

US 2009/015400 describes a remotely monitorable shipping container assembly including a shipping container including at least one door, a door status sensor for monitoring the open or closed status of the door(s) and a communications device mounted on the container and wirelessly transmitting information to one or more remote facilities including the status of the door(s) as monitored by the door status sensor.

Summary of the Invention

The present invention provides a system to automatically detect take off and landing of airplane using accelerometer sensors, and switch on/off the GSM devices accordingly. The acceleration sensor is, for example, installed in a computational unit in the cargo carrier or container, with a wired link to a cargo GSM system. The sensors capture pattern of acceleration during different cargo steps (taxiing, loading, unloading, and flying). The sensor data is processed using the computational unit. The computational unit uses a signal processing and machine learning algorithm to analyse data captured by the acceleration sensor(s) and detect the moment that flight starts taking off, and the moment the flight has landed and being ready for unloading. The computation unit then sends commands for switching off/on the GSM devices accordingly.

According to a first aspect, the invention provides a method for detecting air plane flight events, preferably taking off and/or landing, using at least one acceleration sensor associated with a mobile, GSM, communication device, the method comprising the steps of: obtaining at least one acceleration signal from said at least one acceleration sensor; pre-processing said obtained at least one acceleration signal to remove redundant information present in said signal(s); performing a feature extraction on said pre-processed at least one acceleration signal; and classifying air plane flight events based on the acceleration pattern represented by the extracted acceleration features.

As mentioned above, the term "air plane flight events" is according to the invention not limited to "landing" or "take off" but also encompasses events in the context of a flight, such as taxiing, loading, or unloading. Each of these events can be detected according to the invention due to the associated discriminative pattern.

According to the invention, all the sensory and processing units are integrated in a computational unit or a mobile communication device which makes the invention user friendly and inexpensive.

The step of classifying air plane flight events preferably comprises comparing said acceleration pattern with statistical reference models for events during a flight. The statistical model is preferably an artificial neural network or a Gaussian mixture model. Alternatively, the step of classifying air plane flight events comprises comparing said acceleration pattern with a Hidden Markov model, wherein each state of the model models an event class.

The features extracted from said pre-processed at least one acceleration signal are preferably selected from the group comprising: acceleration magnitude over different axes, the rate of change in acceleration over different axis, the absolute magnitude of the acceleration, and pairwise difference between acceleration magnitudes over different axis.

It is preferred that the method further comprises the step of changing an operating state of the mobile communication device depending on the classification result. Preferably, the mobile communication device is automatically turned on or off. In particular, the mobile communication device is automatically turned off if it is detected that the air plane is going to take off, or the mobile communication device is automatically turned on if it is detected that the air plane has been landed.

According to a preferred aspect, the method further comprises the step of comparing the detected air plane flight event with a regular air plane flight event. Preferably, taking off or landing is detected if the result of the comparing step is a match below a predetermined threshold between the detected air plane flight event and the one or more regular air plane flight events.

It is also preferred according to the invention that the statistical reference models are trained for typical air plane flight events except for taking off and landing.

According to a second aspect, the invention provides a mobile communication device comprising a processor; and at least one acceleration sensor providing at least one acceleration signal to the processor; the processor being configured for pre-processing said at least one acceleration signal to remove redundant information present in said signals, being further configured for performing a feature extraction on said pre-processed at least one acceleration signal; and being configured for classifying air plane flight events based on the acceleration pattern represented by the extracted acceleration features.

Thus, in more general terms, the invention provides a method using accelerometer sensor(s) integrated in a mobile communication device for detecting air plane flight events. The acceleration sensor output is first pre-processed to remove redundant information and extract features which represent the air plane flight event in a discriminative way. These features are used to create reference statistical models for different activities. The outcome of the statistical models is then used in a decision tree in order to detect current air plane flight event. This allows recognizing and distinguishing certain events such as loading, taxiing, take off, flying, landing, unloading.

During the test of the system, actual samples of acceleration data (after feature extraction) are presented to the trained reference models. A score is estimated based on the match between ongoing samples and reference models for different events. This score is used as a basis for classification of different events.

The present invention encompasses several applications of detecting air plane flight events. According to one preferred embodiment, it is used to automatically turn on/off the mobile communication device depending on the current event.

According to a third aspect, the invention provides an independent computational unit connectable with a mobile communication device, the computational unit for detecting air plane flight events, preferably taking off and/or landing, and comprising: a processor; at least one acceleration sensor providing at least one acceleration signal to the processor; the processor being configured for pre-processing said at least one acceleration signal to remove redundant information present in said signals, being further configured for performing a feature extraction on said pre-processed at least one acceleration signal; and being configured for classifying air plane flight events based on the acceleration pattern represented by the extracted acceleration features; and a controller arranged to receive information from the processor and to initiate transmission of a control command to the mobile communication device once connected with the computational unit, based on the detected air plane flight event.

According to a fourth aspect, the invention provides an air cargo carrier or container comprising a mobile communication device and/or a computational unit according to the invention.

The computational unit is separable from the mobile communication device or from the air cargo carrier. Preferably, the computational unit is independent from the mobile communication device and from the air cargo carrier. The term "separable" in accordance with the present invention means that the computational unit can be physically separated from the mobile communication device or from the air cargo carrier. The term "independent" in accordance with certain embodiments of the present invention means that the computational unit is functionally independent from the mobile communication device or from the air cargo carrier.

The invention is advantageous and superior to known implementations because according to the second aspect of the invention it fits into a regular mobile communication device, and is able to operate with the limited resources available in the mobile communication devices in terms of sensory and hardware components. The invention is also advantageous because according to the third aspect it can be provided in a computational unit which is connectable to existing mobile communication devices, for example of air cargo carriers or container.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

The invention will now be described with reference to the accompanying drawings which show in

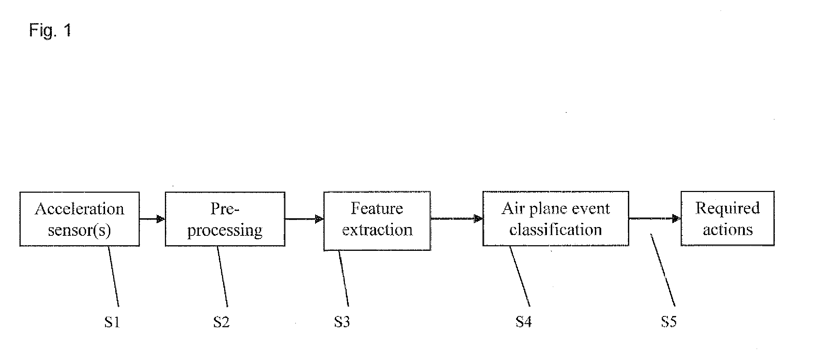

Fig. 1 a general overview of the system according to the invention; and

Fig. 2 an example of an acceleration magnitude pattern during a flight.

According to the invention, data is captured using at least one acceleration sensor integrated in the computational unit or the mobile communication device. The acceleration sensor raw data raw data are stored in a buffer memory, pre-processed by digital filters to remove noise, and used to extract features which represent acceleration modalities more discriminatively. Extracted features are then used in a air plane or flight event classification component to classify the ongoing scenario. It should be noted that the feature extraction and classification modules are preferably implemented using computational resources of the mobile communication device.

The acceleration sensor(s) is(are) integrated in the mobile phone and captures linear acceleration in x, y and z directions.

The feature extraction modules receiving the detected signals from the acceleration sensor(s) disregard redundant information and provide a modified or refined representation of acceleration signals which is more discriminative for classifying ongoing activity and context.

Acceleration based features are features extracted from the accelerometer data and are mainly acceleration magnitude over different axis, the rate of change in acceleration (over different axis), the absolute magnitude of the acceleration, and pairwise difference between acceleration magnitudes over different axis.

In the next step, air plane or fight event classification is performed. Different events have different acceleration pattern signature associated with them. The classification module receives features extracted from acceleration data, and builds statistical reference models for different events during a training phase. The training phase can be done at a manufacturer company, and do not need to be necessarily done by the final user. During the training phase, several feature samples of each event class are presented to the statistical model. The statistical model can be an artificial neural network or Gaussian mixture models. Parameters of the statistical model are trained according to the samples presented for each context class, in order to cover the feature space corresponding to each class. Such a trained model can then be used to estimate scores for different event classes during testing the system. According to a preferred embodiment of the invention where take off and/or landing is of interest, all events are trained except for taking off and landing. Thus, the class having the lowest score or match is representative of an event "taking off" or "landing".

In order to capture the information existing over time or sequence of events, the statistical model can be replaced with a Hidden Markov model (HMM). In this case, each state of the HMM models a certain event class, and transition probabilities between different states represent the possibilities for transition between different event classes. For instance, the 'taking off' event should be preceded usually by a 'taxiing' event, as the air plane usually needs to taxi from the terminal to the runway. In addition, heuristically designed binary decision trees can be used on top of the classification results to further smooth out the decisions about ongoing event by integrating some prior knowledge related to duration and timing of different events.

According to a preferred embodiment of the invention, extra information such as location information (provided by GPS, for example) is additionally integrated in the decision making process. Thus, it is possible to associate different events with certain locations. For instance, an event 'landing' happens at an airport the exact location of which is known. This extra location information helps to have more accurate decision on event detection.

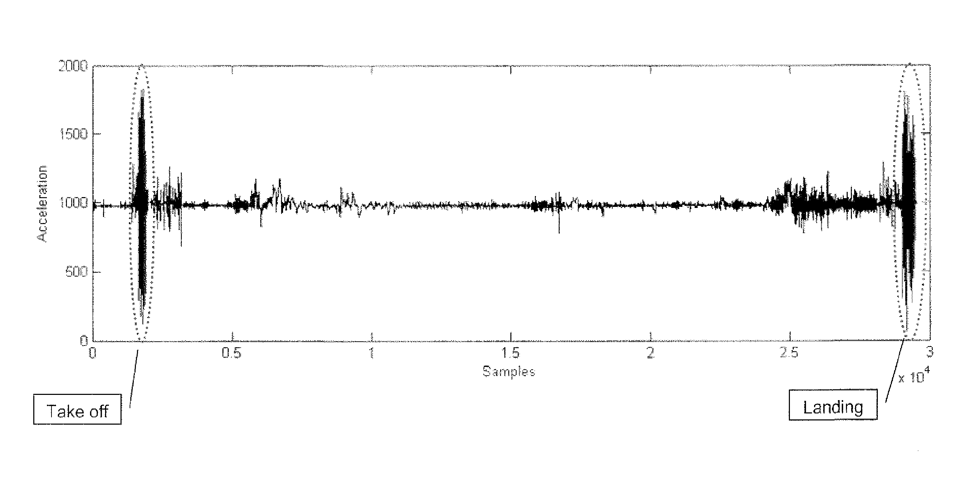

Fig. 2 shows an exemplary acceleration pattern according to the invention. Fig. 2 actually shows the average of the acceleration signals of the three sensors (x-, y-, and z-acceleration). The acceleration samples are recorded during a certain period of time including the two events 'taking off' and 'landing'. As can be seen from the figure, there is a discriminative difference between the pattern of acceleration during different events of a flight.

According to the invention, pre-processing is performed on the measured raw data. The pre-processing step is usually a digital low pass filter.

After pre-processing, feature extraction is performed. According to the invention, feature extraction methods are used which are not computationally expensive considering limited computational resources available in a computational unit connected to an air cargo carrier or a mobile communication device. All the feature extraction methods are applied to a time window of acceleration signal. This window can be 1-2 seconds long. The value of extracted features is averaged over samples in each window. Adjacent windows can have overlaps up to 80%.

Acceleration based features:

The following 4 types of features are preferred according to the invention:

1. Acceleration magnitude over different axis: This is absolute value of acceleration over different x, y, and z axis, i.e. $|a_x|$, $|a_y|$, $|a_z|$, where $a$ indicates acceleration

2. Rate of change of acceleration over different axis: This is derivate of acceleration signal (over different axis) with respect to time, i.e. $\frac{da_x}{dt}$, $\frac{da_y}{dt}$, $\frac{da_z}{dt}$.

3. Absolute magnitude of acceleration: This is defined as: $a = \sqrt{a_x^2 + a_y^2 + a_z^2}$

4. Pairwise difference between acceleration magnitudes along different axis, i.e. $|a_x-a_y|$, $|a_x-a_z|$, $|a_y-a_z|$

However, it is also preferred that combinations or even all of these types are applied together. Most preferred are features 2 or 3.

In addition to above main features, some variants of them can be also used in feature extraction.

The process according to the present invention is preferably employed as follows. Once the computational unit or the mobile communication device is switched on or even if the functionality according to the invention is initiated separately, the acceleration sensor(s) measures the acceleration values. This may be performed continuously or intermittently. A data processor receives the detected signals from the sensor(s), and performs feature extraction. Based at least in part or entirely on the detected acceleration parameters, filtered or "cleaned" acceleration signals are calculated in that redundant information is removed from the signals, as also described above. These data are then supplied to the event classification component of the processor. Here, the acceleration pattern are compared with statistical reference models stored in a memory. The result of such comparison process is the determination of a specific event reflecting the current situation of the air cargo carrier or air plane.

Although the present invention has been described with reference to various embodiments and sequences, other embodiments are considered to be within the scope of the following claims.

## Claims

1. Method for detecting air plane flight events, preferably taking off and/or landing, using at least one acceleration sensor associated with a mobile, GSM, communication device, the method comprising the steps of:

   obtaining at least one acceleration signal from said at least one acceleration sensor;
   pre-processing said obtained at least one acceleration signal to remove redundant information present in said signal(s);
   performing a feature extraction on said pre-processed at least one acceleration signal; and
   classifying air plane flight events based on the acceleration pattern represented by the extracted acceleration features.

2. The method of claim 1, wherein the step of classifying air plane flight events comprises comparing said acceleration pattern with statistical reference models for different events.

3. The method of claim 2, wherein said statistical model is an artificial neural network or a Gaussian mixture model.

4. The method of claim 1, wherein the step of classifying air plane flight events comprises comparing said acceleration pattern with a hidden Markov model, wherein each state of the model models an event class.

5. The method of any of the preceding claims, wherein features extracted from said pre-processed at least one acceleration signal are selected from the group comprising: acceleration magnitude over different axes, the rate of change in acceleration over different axis, the absolute magnitude of the acceleration, and pairwise difference between acceleration magnitudes over different axis.

6. The method of any of the preceding claims, further comprising the step of changing an operating state of the mobile communication device depending on the classification result.

7. The method of claim 6, wherein the mobile communication device is turned on or off to adapt the mobile communication device to the detected air plane flight event.

8. The method of any of the preceding claims, further comprising the step of comparing the detected air plane flight event with one or more regular air plane flight events.

9. The method of claim 8, wherein taking off or landing is detected if the result of the comparing step is a match below a predetermined threshold between the detected air plane flight event and the one or more regular air plane flight events.

10. The method of claim 2, wherein the statistical reference models are trained for typical air plane flight events except for taking off and landing.

11. Mobile communication device comprising
    a processor; and
    at least one acceleration sensor providing at least one acceleration signal to the processor; the processor being configured for pre-processing said at least one acceleration signal to remove redundant information present in said signals, being further configured for performing a feature extraction on said pre-processed at least one acceleration signal; and being configured for classifying air plane flight events based on the acceleration pattern represented by the extracted acceleration features.

12. Computational unit connectable with a mobile communication device, the computational unit for detecting air plane flight events, preferably taking off and/or landing, and comprising:

a processor;
at least one acceleration sensor providing at least one acceleration signal to the processor;
the processor being configured for pre-processing said at least one acceleration signal to remove redundant information present in said signals, being further configured for performing a feature extraction on said pre-processed at least one acceleration signal; and being configured for classifying air plane flight events based on the acceleration pattern represented by the extracted acceleration features; and
a controller arranged to receive information from the processor and to initiate transmission of a control command to the mobile communication device once connected with the computational unit, based on the detected air plane flight event.

13. A mobile communication device being connected to a computational unit according to claim 12.

14. An air cargo carrier comprising a mobile communication device of claim 11 or 13, or a computational unit according to claim 12.

Fig. 1

| Acceleration sensor(s) | → | Pre-processing | → | Feature extraction | → | Air plane event classification | → | Required actions |

S1    S2    S3    S4    S5

EP 2 284 563 A1

Europäisches
Patentamt

European
Patent Office

Office européen
des brevets

# EUROPEAN SEARCH REPORT

**Application Number**

EP 09 16 7795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/042765 A1 (BAILIN DAVID R [US] ET AL) 22 February 2007 (2007-02-22) * abstract * * paragraphs [0007], [0015] - [0023] * | 1-14 | INV. G01S5/00 H04W48/04 |
| Y | US 5 815 407 A (HUFFMAN JAMES R [US] ET AL) 29 September 1998 (1998-09-29) * abstract; figures 36-45 * * column 23, line 53 - column 25, line 31 * | 1-2,5-9, 11-14 | |
| A | WO 2009/088538 A1 (TRACKING INNOVATIONS INC [US]; KRAFT RANDY ALLEN [US]) 16 July 2009 (2009-07-16) * abstract * * paragraphs [0024], [0025], [0100], [0101] * | 1,11-14 | |
| Y | LIANG ZHANG ET AL: "A Two-phase Flight Data Feature Selection Method Using both Filter and Wrapper" SOFTWARE ENGINEERING, ARTIFICIAL INTELLIGENCE, NETWORKING, AND PARALLEL/DISTRIBUTED COMPUTING, 2007. SNPD 2007. EIGHTH ACIS INTERNATIONAL CONFERENCE ON, IEEE, PISCATAWAY, NJ, USA, 1 July 2007 (2007-07-01), pages 447-452, XP031124791 ISBN: 978-0-7695-2909-7 * the whole document * | 3-4,10 | TECHNICAL FIELDS SEARCHED (IPC) G01S H04W |
| A,D | US 2009/015400 A1 (BREED DAVID S [US]) 15 January 2009 (2009-01-15) * abstract * * paragraphs [0143], [ 153] * | 1,11-14 | |

-/--

The present search report has been drawn up for all claims

| Place of search | Date of completion of the search | Examiner |
|---|---|---|
| The Hague | 24 March 2010 | Roost, Joseph |

EPO FORM 1503 03.82 (P04C01)

Europäisches
Patentamt

European
Patent Office

Office européen
des brevets

## EUROPEAN SEARCH REPORT

Application Number

EP 09 16 7795

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 01/33247 A1 (SATSAFE MLS AB [SE]; BONNENFANT BJOERN DE [SE]) 10 May 2001 (2001-05-10) * abstract * ----- | 1,11-14 | |
| A,D | CN 1 630 232 A (ZHU JIANYU [CN]) 22 June 2005 (2005-06-22) * abstract * ----- | 1,11-14 | |

TECHNICAL FIELDS
SEARCHED      (IPC)

The present search report has been drawn up for all claims

| Place of search | Date of completion of the search | Examiner |
|---|---|---|
| The Hague | 24 March 2010 | Roost, Joseph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .............................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 16 7795

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2010

| Patent document cited in search report | | Publication date | Patent family member(s) | | Publication date |
|---|---|---|---|---|---|
| US 2007042765 | A1 | 22-02-2007 | NONE | | |
| US 5815407 | A | 29-09-1998 | AU WO | 1461697 A 9722079 A1 | 03-07-1997 19-06-1997 |
| WO 2009088538 | A1 | 16-07-2009 | NONE | | |
| US 2009015400 | A1 | 15-01-2009 | NONE | | |
| WO 0133247 | A1 | 10-05-2001 | AU SE | 1426901 A 9903993 A | 14-05-2001 04-05-2001 |
| CN 1630232 | A | 22-06-2005 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1630232 A
- WO 0133247 A
- US 2009015400 A